# FASCICULE DE BREVET EUROPEEN

(11) **EP 0 347 279 B1**
(45) Date de publication et mention de la délivrance du brevet: **27.01.1993**
(21) Numéro de dépôt: 89401538.7
(22) Date de dépôt: 05.06.1989
(51) Int. Cl.: F16L 29/00

(54) **Dispositif de raccord rapide**
Schnellkupplungseinrichtung
Quick coupling device

(30) Priorité: 14.06.1988 FR 8807898; 01.12.1988 FR 8815747
(43) Date de publication de la demande: 20.12.1989
(73) Titulaire: HUTCHINSON, F-75008 Paris (FR)
(72) Inventeur: Braut, Patrick, F-49370 La Poueze (FR); Briet, Gilles, Neuve Grandchamp F-71130 Gueugnon (FR)
(74) Mandataire: Brycman, Jean

(56) Documents cités:
- DE-A- 2 453 237
- DE-U- 7 324 437
- DE-U- 7 920 496
- FR-A- 2 089 400
- US-A- 3 532 131
- US-A- 4 022 496
- US-A- 4 119 112

## Description

L'invention a pour objet un dispositif de raccord rapide.

On sait que le montage des circuits de fluide, notamment des circuits de liquide de refroidissement d'un moteur d'automobile, est une opération qui grève les coûts de production de façon importante, en particulier lorsque les essais de vérification montrent des imperfections, de sorte que les constructeurs d'automobiles, qui souhaitent réduire les frais de montage de chaque véhicule, cherchent à s'affranchir des inconvénients liés aux dispositifs de raccord connus, du type à colliers ou analogues. Etant donné que des problèmes semblables se posent pour des circuits de fluide en boucle fermée mis en oeuvre dans des systèmes de refroidissement, ou pour des circuits d'alimentation sous pression, on a déjà proposé, par exemple dans US-A-4 022 496, ou DE-A-2 453 237, ou US-A-3 532 131, des dispositifs de raccord rapide pour circuits de fluide dans lesquels un obturateur porté par un des éléments du dispositif est propre à percer un moyen d'obturation interposé sur ledit circuit. Dans les dispositifs selon les documents cités, le moyen d'obturation est constitué par deux diaphragmes, métalliques, généralement soudés sur les éléments constitutifs du raccord, de sorte que de tels dispositifs sont mal appropriés à leur utilisation dans l'industrie automobile.

C'est, par conséquent, un but de l'invention de fournir un dispositif de raccord rapide, notamment pour circuit de refroidissement de moteur de véhicule automobile, qui permette de considérablement réduire les coûts de montage des moteurs sur les carrosseries qu'ils sont destinés à équiper.

C'est, aussi, un but de l'invention de fournir un tel dispositif qui autorise un démontage éventuel, sans détérioration, de ses éléments constitutifs et qui, en outre, présente une grande fiabilité, notamment sur le plan de l'étanchéité statique.

C'est, encore, un but de l'invention de fournir un dispositif dont le montage n'exige que peu ou pas d'effort.

C'est, enfin, un but de l'invention de fournir un appareillage permettant la mise en oeuvre simple, et à peu de frais d'un tel dispositif de raccord rapide.

Un dispositif de raccord rapide selon l'invention, pour la liaison d'un premier embout sur lequel est fixée une tubulure ou canalisation de circulation d'un liquide de refroidissement d'un moteur de véhicule automobile à un embout d'un circuit d'essai, d'un aérotherme ou d'un autre organe du véhicule, ledit premier embout portant un perforateur d'un moyen d'obturation interposé sur ledit circuit et mis en place préalablement au remplissage du moteur par ledit liquide de refroidissement est caractérisé en ce que ledit moyen d'obturation est un obturateur unique constitué par un joint à membrane en matériau élastomère, comme du caoutchouc ou analogue, en forme générale de cuvette dont le bord libre est conformé suivant un jonc avantageusement à section droite circulaire surmoulé sur une armature de renfort.

Dans une forme de réalisation, le joint à membrane en forme générale de cuvette a un fond qui présente des zones de plus faible résistance pour en faciliter la déchirure, lesdites zones étant avantageusement disposées suivant un dessin en étoile à branches rayonnantes à partir du centre, de sorte qu'après raccord entre eux des deux embouts, la membrane est totalement éclipsée du trajet de circulation du fluide'dans lesdites canalisations.

L'invention prévoit que la paroi latérale de la membrane est surmoulée sur une armature à demi-section droite en L et présente sur sa face externe au moins, et de préférence sur sa face interne également, des bourrelets annulaires d'étanchéité.

Selon une autre caractéristique de l'invention, les bourrelets de la face externe sont décalés longitudinalement par rapport aux bourrelets de la face interne.

L'invention prévoit également que la face interne de la paroi latérale de l'obturateur comporte des créneaux disposés au bord libre de ladite paroi latérale et dans la zone de liaison de ladite paroi latérale à la zone de fond proprement dite.

Selon une autre caractéristique de l'invention, l'armature est de forme générale tronconique avec une extrémité cylindrique adjacente à la paroi latérale de la membrane et une extrémité libre conformée suivant des languettes inclinées sur l'axe de l'obturateur.

Selon encore une autre caractéristique de l'invention, le premier embout comporte des pattes élastiquement déformables à extrémités conformées en crochets pour le maintien et le positionnement d'un mandrin de mise en place de l'obturateur ou des embouts destinés à coopérer avec lui.

Dans la réalisation préférée de l'invention, les pattes élastiquement déformables entourent un manchon relié par une collerette radiale à un fourreau 'de fixation des canalisations ou tubulures du premier embout.

L'invention a également pour objet un procédé pour la liaison d'un premier embout sur lequel est fixé une tubulure ou canalisation de circulation d'un liquide de refroidissement d'un moteur de véhicule automobile à un embout d'un circuit d'essai, d'un aérotherme, ou d'un autre organe du véhicule à l'aide d'un dispositif tel qu'il vient d'être défini, caractérisé en ce qu'il comprend :
. une première étape de montage d'un obturateur dans le premier embout ;
. une seconde étape de remplissage dudit moteur à l'aide d'un liquide de refroidissement ; et
. une troisième étape de rapprochement réciproque des deux embouts pour leur assemblage respectif, ledit rapprochement provoquant l'entraînement, par des moyens associés audit second embout, de l'obturateur, et la perforation de ce dernier lorsque des moyens d'assemblage conjugués sur ledit premier embout et ledit second embout ont été rendus opératoires à la fin du mouvement relatif des deux embouts l'un par rapport à l'autre.

L'invention a également pour objet un obturateur spécialement conçu pour la mise en oeuvre du procédé tel que défini ci-dessus et qui comprend un joint à membrane en matériau élastomère, comme du caoutchouc ou analogue en forme générale de cuvette, à fond présentant des zones de plus faible résistance pour sa déchirure après perforation en son centre par le perforateur, lesdites zones étant conformées suivant une étoile à branches rayonnantes dont les extrémités sont sur un cercle qui limite avec la périphérie une zone annulaire, le bord libre en-forme de jonc de la paroi latérale de la membrane étant surmoulé sur une armature de forme générale tronconique ou en L favorisant la rigidité de la membrane sans cette zone.

D'autres caractéristiques et avantages de l'invention apparaîtront de la description qui suit, faite à titre d'exemple et en référence au dessin annexé dans lequel :
- la figure 1 est une demi-vue en coupe longitudinale illustrant un dispositif selon l'invention ;
- la figure 2 est un schéma explicatif ;
- les figures 3 et 4 illustrent l'appareillage selon l'invention ;
- les figures 5, 6 et 7 illustrent une autre partie du dispositif selon l'invention ;
- la figure 8 est une vue en élévation d'un obturateur du dispositif selon l'invention ;
- la figure 9 est une vue en coupe selon la ligne brisée 9-9 de la figure 8 ;
- la figure 10 est une vue schématique en coupe longitudinale illustrant une variante du dispositif selon l'invention dans sa condition précédant la mise en liaison des embouts à relier entre eux ;
- la figure 11 est une vue analogue à celle de la figure 10, mais dans la condition de liaison ;
- la figure 12 est une vue partielle, en coupe longitudinale et à plus grande échelle, d'un obturateur du dispositif montré sur les figures 10-12 ;
- la figure 13 est une vue suivant la flèche H de la figure 12 ;
- la figure 14 est une section à grande échelle selon la ligne 14-14 de la figure 13 ;
- la figure 15 est une vue partielle à grande échelle du dispositif après liaison des embouts entre eux.

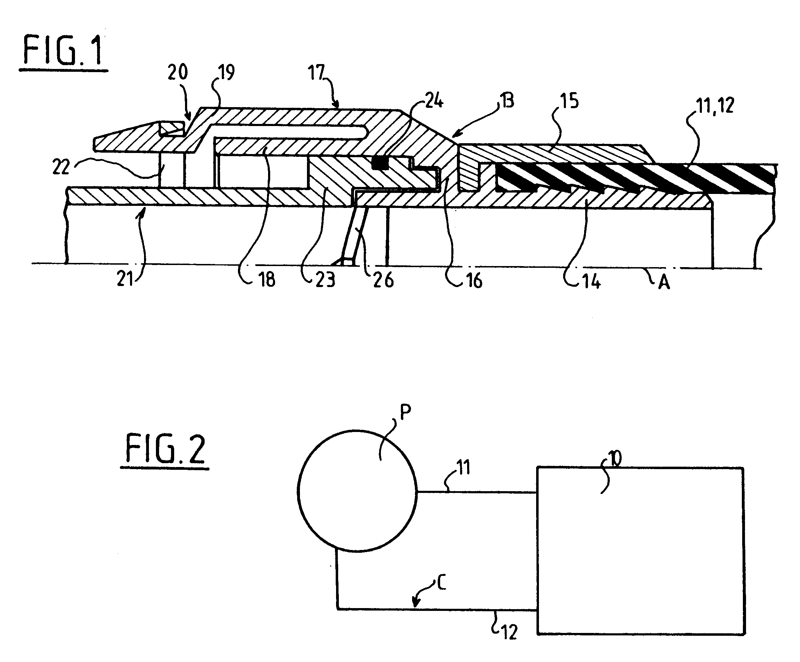

On se réfère d'abord aux figures 1 à 9 relatives à une première forme de réalisation d'un dispositif de raccord rapide selon l'invention destiné à équiper les tubulures ou durites 11 et 12 d'un moteur 10 de véhicule automobile qui, préalablement à son montage, est essayé sur un banc comportant un circuit C de liquide de refroidissement mis en mouvement par une pompe P, figure 2. Pour cette phase d'essai, les tubulures comme 11 et 12 sont munies à leurs extrémités libres d'un embout 13, figure 1, qui est l'une des parties constitutives du dispositif de raccord selon l'invention et qui, comme bien visible sur cette figure, comprend un fourreau interne cylindrique 14 avec lequel coopère une bague 15 pour enserrer et fixer la tubulure comme 11 ou 12 et, en outre, un appendice 17 relié au fourreau 14 par une collerette radiale 16. L'appendice 17 est constitué par un manchon interne 18 de même axe A que celui de l'ensemble du dispositif et qui est lui-même entouré par des pattes 19 de plus grande longueur que celle du manchon et dont les extrémités libres sont conformées suivant des crochets 20. Le matériau constitutif de l'embout 13, de même que le mode d'attache des pattes 19 sur le manchon 18 sont choisis de manière telle que lesdites pattes soient élastiquement déformables, au rapprochement et à l'écartement de l'axe A, de sorte que peut être facilement relié à l'embout 13 un embout 21 portant un collier 22 d'accrochage des crochets 20 et dont la tête 23,conformée en correspondance de la section droite de l'embout 13 entre le fourreau 14 le manchon 18 et la couronne 16 -, porte un joint torique d'étanchéité 24.

Dans la condition d'assemblage qui est celle montrée sur la figure 1, le fluide de refroidissement circule ainsi sans obstacle au droit des embouts 21 et 13, ce dernier portant en outre, à l'extrémité libre du fourreau 14, et dans l'axe A, un percuteur ou perforateur 25 tenu par des bras rayonnants 26.

La structure qui vient d'être décrite permet, par appui sur les extrémités des crochets 20, de très simplement désolidariser l'embout 21 de l'embout 13 lorsque les essais du moteur sont terminés pour vidanger le liquide de refroidissement avant l'expédition du moteur à l'usine de montage du véhicule qu'il est destiné à équiper.

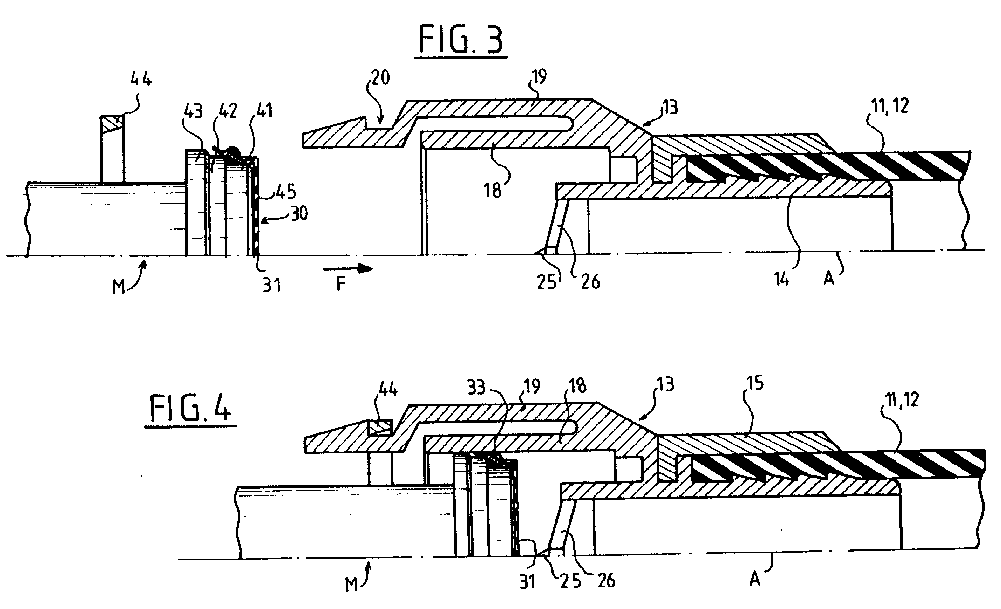

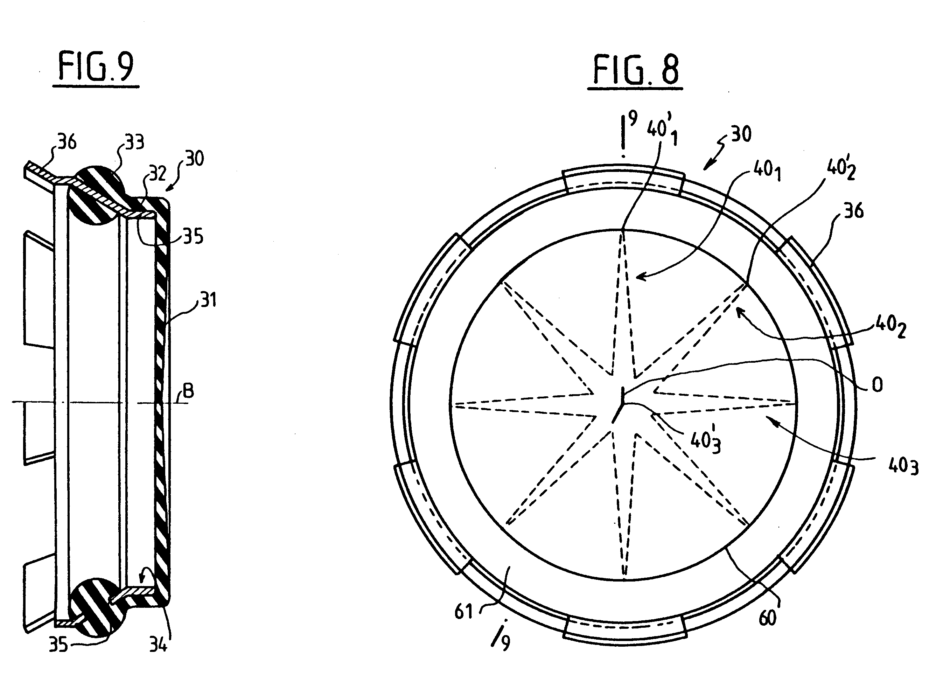

Lorsque, à cette usine, on souhaite à nouveau remplir le moteur de liquide, mais non plus procéder à une vidange ultérieure, on associe à l'embout 13 un obturateur 30, figures 3 à 9. Ce dernier, comme particulièrement bien visible sur les figures 8 et 9, est, selon une première forme de réalisation de l'invention, constitué par un joint à membrane en matériau élastomère comme du caoutchouc ou un matériau analogue, conformé suivant une cuvette à fond 31 et paroi latérale 32 dont le bord libre présente une surépaisseur ou jonc périphérique 33, avantageusement à section circulaire. Celui-ci est surmoulé sur une armature métallique 34, de forme générale tronconique présentant par endroit des crevées 35 pour un bon accrochage du matériau élastomère dans la région du jonc 33, une extrémité cylindrique 35 intérieure à la paroi 32 de la membrane à laquelle elle est adjacente et à son autre extrémité, libre, des languettes 36 inclinées sur l'axe longitudinal B de la membrane et qui sont régulièrement réparties angulairement autour dudit axe.

Selon une autre caractéristique de l'invention, le fond 31 du joint à membrane que forme l'obturateur 30 présente, de fabrication, des zones de plus faible résistance que le reste de la membrane, par exemple en raison de leur moindre épaisseur, lesdites zones destinées à assurer une déchirure régulière de la membrane, comme il sera précisé ci-après, étant disposées suivant un dessin d'étoile régulier de centre O confondu avec celui du fond 31 et à bras 40₁, 40₂, 40₃..., etc. rayonnants du centre vers la périphérie en s'amincissant progressivement jusqu'à des pointes 40′₁, 40′₂, 40′₃..., etc. qui définissent un cercle 60 limitant avec la périphérie externe de la membrane une couronne 61.

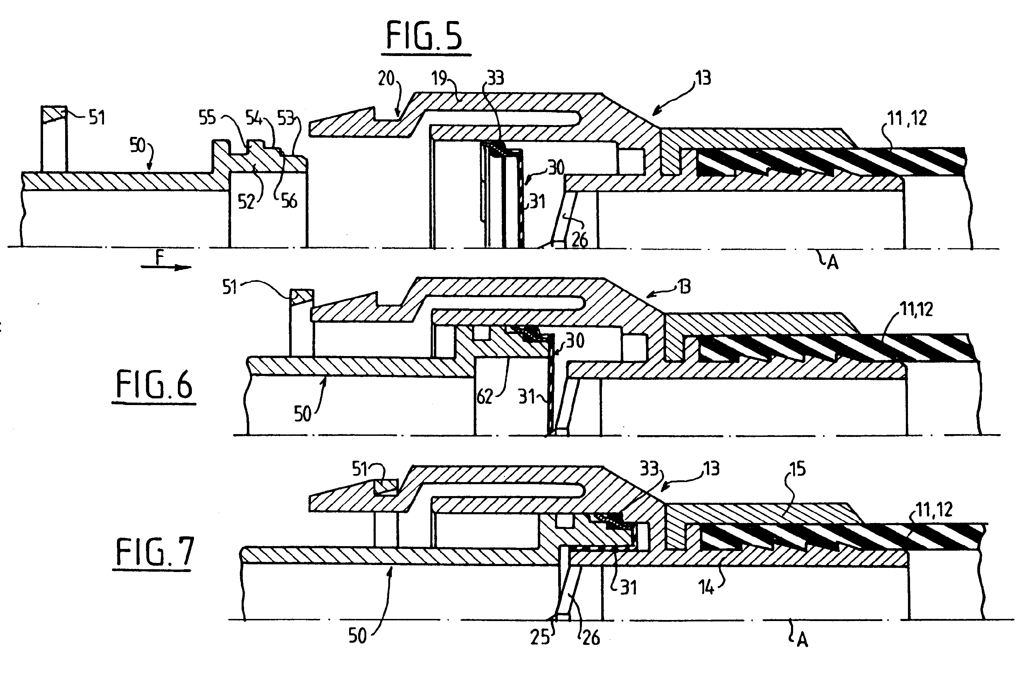

Pour permettre le remplissage du moteur en liquide de refroidissement, à l'usine de montage, on rapporte tout d'abord l'obturateur 30 sur un mandrin M, figures 3 et 4, conformé à son extrémité libre suivant trois portées coaxiales 41, 42 et 43 de diamètres croissants, et dont le corps porte un collier 44, analogue au collier 22 de l'embout 21 mais à une distance telle de la face frontale 45 de la portée antérieure 41 du mandrin M que lorsque ledit collier coopère avec les crochets 20 de l'embout 13, la membrane 31 de l'obturateur 30 est à distance du perforateur 25. Pour la mise en place de l'obturateur dans l'embout 13, on rapproche simplement de ce dernier le mandrin M, par un mouvement de translation suivant la direction de la flèche F jusqu'à ce que les crochets 20 des pattes 19 de l'embout 13 viennent s'encliqueter dans le collier 44 dudit mandrin. La condition est alors celle montrée sur la figure 4, en laquelle l'obturateur 30 est logé dans le manchon 18 de l'embout 13, à distance du perforateur 25 et avec, d'une part, le jonc 33 faisant office de joint d'étanchéité et, d'autre part, les languettes 36 appliquées contre le manchon 18. Lorsque le moteur est rempli de liquide de refroidissement et mis en pression pour déceler des fuites éventuelles, lesdites languettes 36 s'opposent à l'extraction de l'obturateur hors du manchon 18, même lorsque le mandrin M a été retiré laissant en place l'obturateur dans l'embout 13, c'est-à-dire quand est réalisée la condition montrée sur la figure 5.

Lorsqu'à partir de celle-ci, le moteur rempli de son liquide de refroidissement doit être assemblé sur la chaîne de montage au véhicule qu'il est destiné à équiper, il est d'abord mis en place dans le compartiment moteur et le circuit de liquide de refroidissement est établi en reliant l'embout 13 à l'embout 50 d'un aérotherme avec suppression simultanée de l'obstacle à la circulation du liquide de refroidissement constitué par l'obturateur 30. Pour ce faire, l'embout 50, - qui est muni d'un collier 51 analogue aux colliers 22 et 44 et dont la tête 52 est conformée sur sa surface latérale externe suivant des portées 53-55 analogues aux portées 41-43 du mandrin M -, est introduit, par déplacement dans le sens de la flèche F, dans l'embout 13. Au cours de cette introduction, la tête 52 de l'embout vient au contact de l'obturateur 30 jusqu'à ce que le jonc 33 de celui-ci repose sur la portée 53, en butée sur l'épaulement 56 entre ladite portée et la portée 54, de sorte que le mouvement d'introduction se poursuivant, l'embout 50 entraîne l'obturateur 30 au rapprochement du perforateur 25 jusqu'à atteindre la position montrée sur la figure 6 en laquelle le perforateur commence à déchirer la membrane 31 en son centre O. Lorsque le mouvement de rapprochement des embouts 13 et 50 se poursuit, la déchirure initiale progresse le long des lignes de plus faible résistance des branches 40 pour ouvrir l'obturateur 30 jusqu'aux pointes 40′₁, 40′₂, 40′₃..., etc. des branches 40.

A fin d'introduction de l'embout 50 dans l'embout 13, - c'est-à-dire dans la condition montrée sur la figure 7 en laquelle les crochets 22 des pattes 19 coopèrent avec le collier 51 -, la membrane 31 de l'obturateur 30 est logée entre la surface externe du fourreau 14 et la surface interne 62 de la tête 52 de l'embout 50, le jonc 33 assurant l'étanchéité entre les deux embouts, concurremment au reste de la membrane qui est totalement éclipsée du trajet de circulation du fluide de refroidissement entre l'aérotherme et les tubulures 11, 12 reliées au moteur.

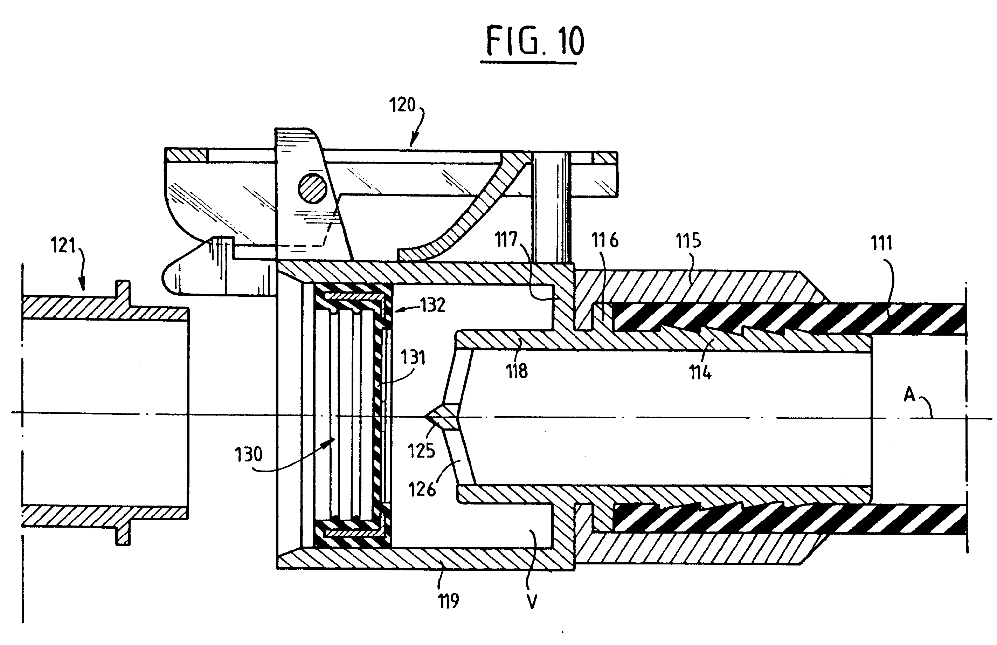

On se réfère maintenant aux figures 10 à 15 relatives à une autre forme de réalisation d'un dispositif destiné à équiper la tubulure ou durite 111 d'un moteur, non représenté, qui, préalablement à son montage, est essayé sur un banc comportant un circuit de liquide de refroidissement se terminant à une extrémité par une tubulure 112 qui est l'une des parties constitutives du dispositif de raccord selon l'invention. Celui-ci comprend un fourreau interne cylindrique 114 d'axe A, analogue au fourreau 14 de la réalisation précédente, sur lequel est emmanché la tubulure 111 maintenue en position par une bague 115. Le fourreau 114, qui présente une collerette externe 116 de butée de la tubulure 111, présente également une seconde collerette 117 de plus grand diamètre que la première et qui forme le fond d'un espace V limité intérieurement par une cheminée 118 prolongeant le fourreau 114 et extérieurement par un embout 119 constitutif de la partie femelle du raccord laquelle porte des moyens 120, par exemple à pattes élastiques, pour sa liaison amovible à la partie mâle 121 du raccord comprenant la tubulure 112.

Comme dans le dispositif illustré aux figures 1 à 9, la cheminée 118 porte à son extrémité un perforateur axial 125 tenu par des bras rayonnants 126 et, de façon analogue à ce qui est décrit ci-dessus, un obturateur 130 est associé à l'embout 119 dans la condition précédant l'établissement de la liaison destinée à former le circuit de liquide et qui est celle illustrée sur la figure 10.

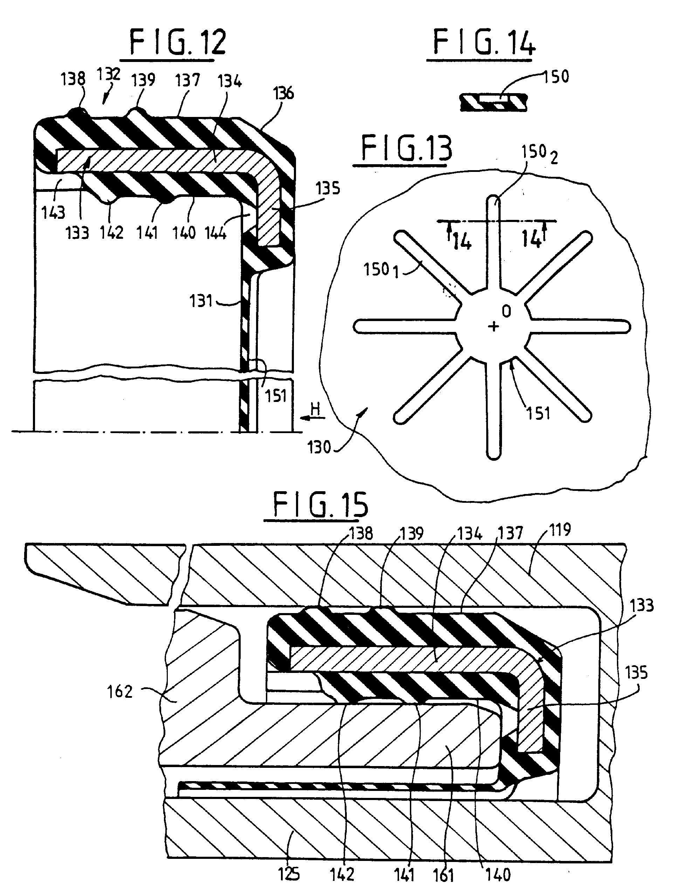

Comme bien montré sur les figures 12, 13 et 14, l'obturateur 130 est constitué par un joint à membrane en matériau élastomère, comme du caoutchouc ou un matériau analogue, conformé suivant une cuvette à fond 131 et paroi latérale 132 surmoulée sur une armature métallique 133 dont la demi-section droite est un L à branche axiale de grande dimension 134 et branche radiale de petite dimension, 135. Comme bien visible sur la figure 12, la face du joint en regard du perforateur 125 présente une surface conique 136 à la jonction du fond 131 proprement dit et de la paroi latérale, cette dernière présentant en outre sur sa face externe 137 des bourrelets d'étanchéité 138 et 139 et sur sa face interne 140 des bourrelets d'étanchéité 141 et 142 décalés axialement par rapport aux premiers.

Sur ladite face interne 140 la surface latérale surmoulée sur l'armature 133 présente en outre des créneaux 143 et 144, les premiers sur le bord libre de la paroi latérale et les seconds à la jonction de ladite paroi et du fond 131, lesdits créneaux étant destinés à éviter la déformation de l'armature au moment du moulage. Le fond ou membrane 131 comporte, de fabrication, des zones de plus faible résistance que le reste de la membrane, par exemple en raison de leur moindre épaisseur (figure 14), lesdites zones destinées à assurer une déchirure régulière de la membrane étant disposées suivant un dessin en étoile régulier de centre O confondu avec celui du fond 131 et à branches rayonnantes 150₁, 151₂, 150₃... etc. s'étendant à partir d'une zone centrale circulaire 151, elle aussi de plus faible épaisseur, jusqu'à la partie de plus forte épaisseur surmoulée sur la branche radiale de courte dimension 135 de l'armature métallique.

Dans la condition montrée sur la figure 10, qui est celle précédant le montage du moteur sur un véhicule qu'il est destiné à équiper, l'obturateur 130 est à distance du perforateur 125 et ferme à étanchéité l'embout 119 par ses bourrelets 138, 139, de sorte que le moteur rempli de liquide de refroidissement et mis en pression pour déceler des fuites éventuelles peut être aisément essayé.

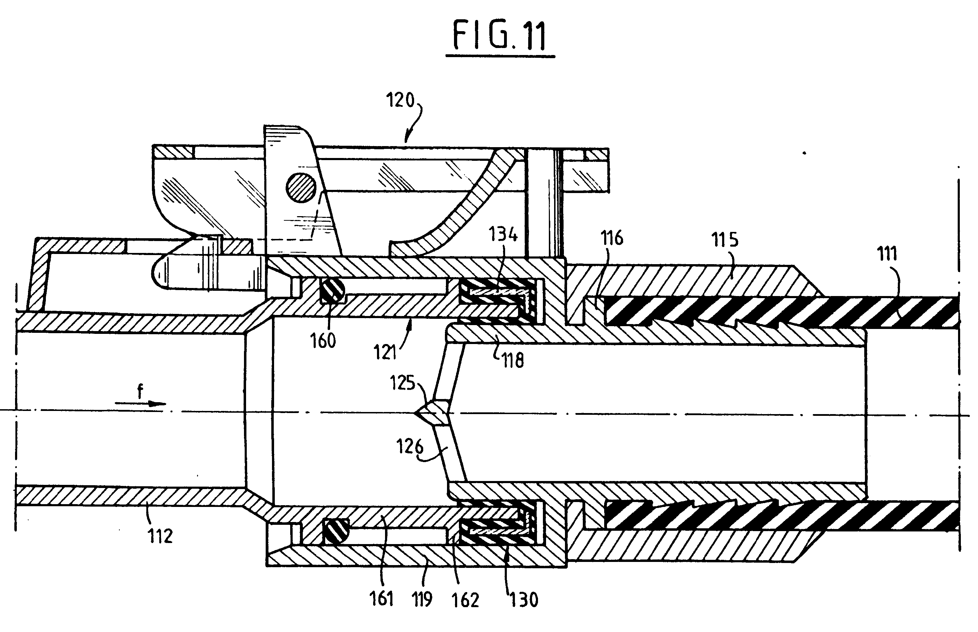

Lorsque, ensuite, le moteur rempli de son liquide de refroidissement doit être assemblé sur la chaîne de montage du véhicule, la partie mâle 121 du raccord, -qui porte éventuellement un joint torique 160 sur sa périphérie externe -, est déplacée dans le sens de la flêche f, figure 11, pour coopérer avec la partie femelle du raccord. Au cours de ce déplacement, la partie d'extrémité 161 de la tubulure 112 qui présente une collerette radiale 162 pénètre dans l'obturateur 130 en forme de cuvette jusqu'à butée de l'extrémité antérieure de sa partie 161 contre la partie 144 de fond de la cuvette de la membrane. Lorsque le mouvement de la partie mâle 121 se poursuit dans le sens de la flêche f, ladite partie entraîne l'obturateur 130 au rapprochement du perforateur 125 et quand ce dernier vient au contact de la zone 151 il commence à déchirer la membrane 131 et cette déchirure initiale progresse ensuite le long des lignes 150 tandis que la membrane se plaque sur la face externe de la cheminée 118.

A la fin du mouvement de rapprochement des parties mâle et femelle du raccord, les moyens 120 sont rendus opératoires et la condition est alors celle montrée sur la figure 11, ou à plus grande échelle sur la figure 12, où la membrane 131 de l'obturateur 130 plaquée sur la surface externe du manchon 118 et coopérant à étanchéité par ses bourrelets 141, 142 avec la surface externe de la partie 161 de même que par ses bourrelets 138 et 139 avec la surface interne de la partie femelle, assure l'étanchéité entre les deux dites parties du raccord.

Le dispositif selon l'invention, dans lequel l'étanchéité statique est obtenue à l'aide des bourrelets 138, 139 et 141, 142 de petite dimension permet d'assurer le montage sans effort important.

De bons résultats ont été obtenus avec un obturateur dont le diamètre de la paroi latérale était de l'ordre de 32 mm, le diamètre intérieur de ladite paroi environ 26 mm et l'épaisseur des bourrelets de l'ordre de 0,25 mm.

## Revendications

1. Dispositif de raccord rapide pour la liaison d'un premier embout (13) sur lequel est fixée une tubulure ou canalisation (11, 12 ; 111) de circulation d'un liquide de refroidissement d'un moteur de véhicule automobile à un embout (21, 50 ; 121) d'un circuit d'essai, d'un aérotherme ou d'un autre organe du véhicule, ledit premier embout (13) portant un perforateur (25 ; 125) d'un moyen d'obturation (30 ; 130) interposé sur ledit circuit et mis en place préalablement au remplissage du moteur par ledit liquide de refroidissement, caractérisé en ce que ledit moyen d'obturation est un obturateur unique (30) constitué par un joint à membrane en matériau élastomère, comme du caoutchouc ou analogue, en forme générale de cuvette dont le bord libre est conformé suivant un jonc (33) avantageusement à section droite circulaire surmoulé sur une armature de renfort (34).

2. Dispositif de raccord suivant la revendication 1, caractérisé en ce que le joint à membrane (30 ; 130) en forme générale de cuvette de l'obturateur a un fond (31 ; 131) qui présente des zones de plus faible résistance pour en faciliter la déchirure, lesdites zones étant avantageusement disposées suivant un dessin en étoile à branches (40 ; 150) rayonnantes à partir du centre (O) de sorte qu'après raccord entre eux des deux embouts (13, 50 ; 121) la membrane est totalement éclipsée du trajet de circulation de fluide dans lesdites canalisations.

3. Dispositif selon la revendication 2, caractérisé en ce que la paroi latérale (132) de la membrane est surmoulée sur une armature (133) à demi-section droite en L et présente sur sa face externe (137) au moins, et de préférence sur sa face interne (140) également, des bourrelets annulaires d'étanchéité (138, 139 ; 141, 142).

4. Dispositif selon la revendication 3, caractérisé en ce que les bourrelets (138, 139) de la face externe (137) sont décalés longitudinalement par rapport aux bourrelets (141, 142) de la face interne (140).

5. Dispositif selon la revendication 3, caractérisé en ce que la face interne (140) de la paroi latérale de l'obturateur (130) comporte des créneaux (143, 144) disposés au bord libre de ladite paroi latérale (132) et dans la zone de liaison de ladite paroi latérale (132) à la zone de fond (131) proprement dite.

6. Dispositif de raccord suivant la revendication 1, caractérisé en ce que l'armature (34) est de forme générale tronconique avec une extrémité (35) cylindrique adjacente à la paroi latérale (32) de la membrane et une extrémité libre conformée suivant des languettes (36) inclinées sur l'axe (B) de l'obturateur (30).

7. Dispositif de raccord selon l'une quelconque des revendications précédentes, caractérisé en ce que le premier embout comporte des pattes élastiquement déformables (19, 119) à extrémités conformées en crochets (22) pour le maintien et le positionnement d'un mandrin (M) de mise en place de l'obturateur (30 ; 130) ou d'un embout (21 ; 121) destiné à coopérer avec lui.

8. Dispositif de raccord rapide selon la revendication 7, caractérisé en ce que les pattes élastiquement déformables (19 ; 119) entourent un manchon (18 ; 118) relié par une collerette radiale (16 ; 116) à un fourreau (14 ; 114) de fixation des canalisations ou tubulures (11 ; 111) sur ledit premier embout.

9. Procédé pour la liaison d'un premier embout (13) sur lequel est fixée une tubulure ou canalisation (11, 12 ; 111) de circulation d'un liquide de refroidissement d'un moteur de véhicule automobile à un embout (21, 50 ; 121) d'un circuit d'essai, d'un aérotherme ou d'un autre organe du véhicule à l'aide d'un dispositif selon l'une quelconque des revendications 1 à 8, caractérisé en ce qu'il comprend :
. une première étape de montage d'un obturateur (30, 130) dans le premier embout ;
. une seconde étape de remplissage dudit moteur à l'aide d'un liquide de refroidissement ; et
. une troisième étape de rapprochement réciproque des deux embouts pour leur assemblage respectif, ledit rapprochement provoquant l'entraînement, par des moyens associés audit second embout, de l'obturateur (30 ; 130) et la perforation de ce dernier lorsque des moyens d'assemblage (21 ; 121) conjugués sur ledit premier embout et ledit second embout ont été rendus opératoires à la fin du mouvement relatif des deux embouts l'un par rapport à l'autre.

10. Obturateur spécialement conçu pour la mise en oeuvre du procédé selon la revendication 9, caractérisé en ce qu'il comprend un joint à membrane en matériau élastomère, comme du caoutchouc ou analogue en forme générale de cuvette, à fond (31 ; 131) présentant des zones de plus faible résistance pour sa déchirure après perforation en son centre par ledit perforateur (25 ; 125), lesdites zones étant conformées suivant une étoile à branches rayonnantes (40 ; 150) dont les extrémités (40′, ...) sont sur un cercle qui limite avec la périphérie une zone annulaire (61), le bord libre en forme de jonc de la paroi latérale de la membrane étant surmoulé sur une armature de forme générale tronconique ou en L favorisant la rigidité de la membrane dans cette zone.

## Patentansprüche

1. Schnellkupplungseinrichtung zur Verbindung eines ersten Muffenendes (13), auf dem ein Schlauch oder eine Leitung (11, 12; 111) zur Zirkulation einer Kühlflüssigkeit eines Kraftfahrzeugmotors befestigt ist, mit einem Muffenende (21, 50; 121) eines Testkreises, eines Luftheizgerätes oder einem anderen Kraftfahrzeugorgan, wobei dieses erste Muffenende (13) eine Perforiervorrichtung (25; 125) einer Verschlußeinrichtung (30; 130) trägt, die in diesem Kreislauf zwischengeordnet und vor dem Befüllen des Motors mit dieser Kühlflüssigkeit eingesetzt ist, dadurch gekennzeichnet, daß diese Verschlußeinrichtung ein einziges Verschlußelement (30) ist, das durch eine Membrandichtung aus elastomerem Material, wie Gummi oder dergleichen, von allgemeiner Napfform gebildet ist, deren freier Rand entsprechend einem Wulst (33) vorzugsweise mit kreisrundem Querschnitt geformt ist, welcher auf eine Verstärkungsarmierung (34) aufgeformt ist.

2. Schnellkupplungseinrichtung nach Anspruch 1, dadurch gekennzeichnet, daß die Membrandichtung (30; 130) von allgemeiner Napfform des Verschlußelementes über einen Boden (31; 131) verfügt, der Bereiche geringerer Festigkeit aufweist, um deren Zerreißen zu erleichtern, wobei diese Bereiche vorzugsweise in Sterngestalt mit von der Mitte (O) strahlenförmig verlaufenden Armen (40; 150) angeordnet sind, derart, daß die Membran nach der Verbindung der beiden Muffenenden (13, 50; 121) miteinander vollständig aus dem Zirkulationsweg des Fluids in diesen Leitungen gezogen ist.

3. Schnellkupplungseinrichtung nach Anspruch 2, dadurch gekennzeichnet, daß die seitliche Wand (132) der Membran auf eine Armierung (133) mit L-förmigem Halbquerschnitt aufgeformt ist und wenigstens auf ihrer Außenfläche (137) und vorzugsweise auch auf ihrer Innenfläche (140) ringförmige Dichtungswülste (138, 139; 141, 142) aufweist.

4. Schnellkupplungseinrichtung nach Anspruch 3, dadurch gekennzeichnet, daß die Wülste (138, 139) der Außenfläche (137) in Längsrichtung, bezogen auf die Wülste (141, 142) der Innenfläche (140), versetzt sind.

5. Schnellkupplungseinrichtung nach Anspruch 3, dadurch gekennzeichnet, daß die Innenfläche (140) der seitlichen Wand des Verschlußelementes (130) mauerzackenartige Ausnehmungen (143, 144) umfaßt, die am freien Rand dieser seitlichen Wand (132) und im Verbindungsbereich dieser seitlichen Wand (132) mit dem Bereich des eigentlichen Bodens (131) angeordnet sind.

6. Schnellkupplungseinrichtung nach Anspruch 1, dadurch gekennzeichnet, daß die Armierung (34) von allgemeiner kegelstumpfartiger Form ist, wobei ein zylindrisches Ende (35) zu der seitlichen Wand (32) der Membran benachbart und ein freies Ende in zur Achse (B) des Verschlußelementes (30) geneigte Zungen (36) geformt ist.

7. Schnellkupplungseinrichtung nach einem der vorhergehenden Ansprüche, dadurch gekennzeichnet, daß das erste Muffenende elastisch verformbare Pratzen (19, 119) mit zu Haken (22) geformten Enden zum Halten und Positionieren eines Dorns (M) zum Einsetzen des Verschlußelementes (30; 130) oder eines mit diesem zusammenwirkenden Muffenendes (21; 121) aufweist.

8. Schnellkupplungseinrichtung nach Anspruch 7, dadurch gekennzeichnet, daß die elastisch verformbaren Pratzen (19; 119) eine Hülse (18; 118) umgeben, die über einen radialen Bund (16; 116) mit einer Buchse (14; 114) zur Befestigung der Leitungen oder Schläuche (11; 111) an diesem ersten Muffenende verbunden sind.

9. Verfahren zur Verbindung eines ersten Muffenendes (13), auf dem ein Schlauch oder eine Leitung (11, 12; 111) zur Zirkulation einer Kühlflüssigkeit eines Kraftfahrzeugmotors befestigt ist, mit einem Muffenende (21, 50; 121) eines Testkreises, eines Luftheizgerätes oder einem anderen Kraftfahrzeugorgan mittels einer Einrichtung gemäß einem der vorhergehenden Ansprüche 1 bis 8, gekennzeichnet durch:
einen ersten Schritt der Montage eines Verschlußelementes (30; 130) in das erste Muffenende;
einen zweiten Schritt des Befüllens des Motors mit einer Kühlflüssigkeit; und
einen dritten Schritt der reziproken Annäherung der zwei Muffenenden zu deren entsprechender Zusammenfügung, wobei diese Annäherung die Mitnahme des Verschlußelementes (30; 130) durch die mit diesem zweiten Muffenende verbundenen Mittel und die Perforierung dieses letzten bewirkt, wenn mit diesem ersten Muffenende und diesem zweiten Muffenende verbundene Zusammenfügungseinrichtungen (21; 121) am Ende der Relativbewegung der zwei Muffenenden zueinander in Funktionseingriff gebracht wurden.

10. Verschlußelement, besonders geeignet zur Durchführung des Verfahrens nach Anspruch 9, dadurch gekennzeichnet, daß es eine Membrandichtung aus elastomerem Material, wie Gummi oder dergleichen, von allgemeiner Napfform mit Boden (31; 131) umfaßt, der in seiner Mitte Bereiche geringerer Festigkeit für sein Zerreißen nach Perforierung durch diese Perforiervorrichtung (25; 125) aufweist, wobei diese Bereiche entsprechend einem Stern mit strahlenförmig verlaufenden Armen (40; 150) geformt sind, dessen Enden (40′, ...) sich auf einem Kreis befinden, der mit dem Umfang einen ringförmigen Bereich (61) begrenzt, wobei der freie Rand in Wulstform der seitlichen Wand der Membran auf eine allgemeine kegelstumpfartige oder L-förmige Armierung aufgeformt ist, welche die Steifigkeit der Membran in diesem Bereich begünstigt.

## Claims

1. A quick coupling device for connecting a first socket (13) on which is fixed a pipe or duct (11, 12; 111) for conveying a liquid for cooling a motor vehicle engine to a socket (21, 50; 121) of a test circuit, a heater or any other device in the vehicle, the said first socket (13) carrying a perforator (25; 125) of an occluding means (30; 130) interposed on the said circuit and positioned prior to the engine being filled with the said cooling liquid, characterised in that the said occluding means is a single stopper (30) constituted by a seal having a diaphragm of elastomeric material, such as rubber or the like, and generally cup-shaped, its free edge being shaped like a ring (33) advantageously of circular cross-section, moulded onto a reinforcing frame (34).

2. A coupling device according to Claim 1, characterised in that the generally cup-shaped diaphragm seal (30; 130) of the occluding device has a bottom (31; 131) having zones of reduced strength to facilitate tearing them, the said zones being advantageously disposed in a stellate pattern (40; 150) radiating out from the centre (O) so that after the two sockets (13, 50; 121) have been coupled together, the diaphragm is totally eclipsed by the path of circulation of fluid through the said ducting means.

3. A device according to Claim 2, characterised in that the lateral wall (132) of the diaphragm is moulded onto a frame (133) having an L-shaped half cross-section and has on its outer face (137) at least, and preferably on its inner face (140) also, annular sealing-tight beads (138, 139; 141, 142).

4. A device according to Claim 3, characterised in that the beads (138, 139) on the outer face (137) are offset longitudinally in relation to the beads (141, 142) on the inner face (140).

5. A device according to Claim 3, characterised in that the inner face (140) of the lateral wall of the occluding means (130) comprises notches (143, 144) disposed on the free edge of the said lateral wall (132) and in the zone connecting the said lateral wall (132) to the bottom zone (131) proper.

6. A coupling device according to Claim 1, characterised in that the frame (34) is of generally frustoconical form having a cylindrical end (35) adjacent the lateral wall (32) of the diaphragm and a free end which is shaped like small tongues (36) inclined in respect of the axis (B) of the occluding device (30).

7. A coupling device according to any one of the preceding Claims, characterised in that the first socket comprises elastically deformable lugs (19, 119) having hook-shaped ends (22) for maintaining and positioning a mandrel (M) for positioning of the occluding device (30; 130) or a socket (21; 121) intended to cooperate therewith.

8. A quick coupling device according to Claim 7, characterised in that the elastically deformable lugs (19; 119) engage around a sleeve (18; 118) connected by a radial collar (16; 116) to a sleeve (14; 114) for fixing ducting or pipes (11; 111) onto the said first socket.

9. A method of connecting a first socket (13) on which is fixed a pipe or duct (11, 12; 111) for conveying a liquid for cooling a motor vehicle engine to a socket (21, 50; 121) of a test circuit, a heater or any other device in the vehicle, using a device according to any one of Claims 1 to 8, characterised in that it comprises:
. a first stage for fitting an occluding device (30, 130) into the first socket;
. a second stage for filling the engine with a cooling liquid and
. a third stage involving bringing the two sockets together for their respective assembly, the said action of bringing them together causing the entrainment by means associated with the said second socket of the occluding device (30; 130) and the perforation of this latter when the conjugate assembly means (21; 121) on the said first socket and the said second socket have been rendered operative upon completion of the relative movement of the two sockets, the one in relation to the other.

10. An occluding device especially designed for carrying out the method according to Claim 9, characterised in that it comprises a diaphragm seal of elastomeric material, such as rubber or the like, generally cup-shaped and having an end (31; 131) having zones of lesser resistance so that it can be torn after being perforated in its centre by the said perforator (25; 125) the said zones being shaped like a star with radiating arms (40; 150), of which the ends (40′, ...) are on a circle the circumference of which defines an annular zone (61), the ring-shaped free edge of the lateral wall of the diaphragm being moulded onto a frame of generally frustoconical or L-shaped cross-section favouring the rigidity of the diaphragm of this area.
